# EUROPEAN PATENT SPECIFICATION

(11) **EP 0 140 969 B1**
(45) Date of publication and mention of the grant of the patent: **17.08.1994**
(21) Application number: 84902135.7
(22) Date of filing: 03.05.1984
(51) Int. Cl.: B32B 17/06, B32B 17/10

(54) **LAMINATED SAFETY GLASS**
LAMINIERTES SICHERHEITSGLAS
VERRE LAMINE DE SECURITE

(30) Priority: 03.05.1983 US 490997
(43) Date of publication of application: 15.05.1985
(73) Proprietor: BOLTON, Nelson P., Quakertown, PA 18951 (US); SMITH, Novis W. Jr., Philadelphia, PA 19103 (US)
(72) Inventor: BOLTON, Nelson P., Quakertown, PA 18951 (US); SMITH, Novis W. Jr., Philadelphia, PA 19103 (US)
(74) Representative: Bauer, Wulf, Dr.
(86) International application number: US8400669
(87) International publication number: WO8404277

(56) References cited:
- DE-A- 2 334 743
- DE-A- 2 606 569
- US-A- 3 264 272
- US-A- 3 344 014
- US-A- 3 582 455
- US-A- 3 666 614
- US-A- 4 104 216
- CHEMICAL ABSTRACTS, vol. 101, 1984, page 282, abstract no. 115681u, Columbus, Ohio, US; & JP-A-59 78 958

## Description

This invention relates to a transparent laminated safety glass comprising a first lamina consisting of an ionomer film in the form of a metal crosslinked ethylene-methacrylic acid polymer and one sheet of primed or unprimed glass laminated to said ionomer.

A transparent laminated safety glass of the kind mentioned above is known from US-A-3,344,014 which teaches a neutralization of the ionomer either with a metal ion - as mentioned above - or with an organic polyamine. When the ionic copolymers described therein are to be used for optical safety glass it is said to be desirable to achieve a balance between the number of carboxylic acid groups which are neutralized and the number which remain unneutralized since an increase in the former imparts improved toughness, clarity, and tensile properties to the resin, while an increase in the latter provides better adhesion to the glass.

US-A-3,582,455 refers to an intermediate ionomer sheet and teaches a laminated safety glass comprising two sheets of glass with an inner sheet disposed therebetween. The intermediate ionomer sheet is not bonded to the glass.

US-A-3,666,614 discloses glass-polycarbonate laminates using an adhesive interlayer comprising ethylene and methacrylic acid without crosslinking agents. The copolymer is hazy, limp, and has poor stiffness.

DE-A-2 334 743 refers to a safety glass using an intermediate layer of an ethylene-acrylic acid copolymer between two sheets of glass. Crosslinking agents are not mentioned therein.

Finally DE-A-2 606 569 discloses a laminated glass which contains an adhesive layer containing methacrylate that binds individual panes together. The ionomer is utilized to absorb impact shock and distribute impact energy so as to be effective in rendering the structure bullet-proof.

The invention as claimed is intended to improve the transparent laminated article of the US-A-3,344,014. It solves the problem of how to enhance the optical clarity of the ionomer resin film and providing better adhesion to glass at the same time.

This problem is solved by the transparent laminated article of claim 1. The advantages offered thereby are an improvement in optical clarity even at thickness of 0.7 mm and more and an improvement in physical characteristics, especially adhesion. There is an improvement in adhesion even with difficult to adhere material such as sheets of polycarbonate and metals.

Organic amines are combined with the ionomer resin in an amount of from about 0.5 to about 7 %, by weight, based on the weight of the resin. It has been found that the presence of an organic amine in the ionomer resin serves to maintain the optical clarity of the laminates produced in the invention. Useful organic amines include aliphatic diamines or triamines such as diethylenetriamine, the commercially available organic amines are simply combined with the ionomer resin pellets and extruded or cast as desired.

Likewise, a mixture of sodium and zinc ionomer resins may be used to prepare the ionomer resin film useful in the invention. The sodium and zinc ionomer resins may be combined in a ratio of 95:5 to 5:95.

The invention provides new glass laminates, which are considerably less expensive than polyurethane laminates (as described in US-A-3,888,032 e. g.), yet which at the same time are every bit as satisfactory, if not more so, with regard to adhesion, strength and clarity.

Laminates according to this invention comprise at least one layer of glass laminated with an ionomer resin film. The terms "ionomer" or "ionomer resin" mean an extrudable resin comprising ionically crosslinked ethylene-methacrylic acid copolymers; and more particularly, sodium or zinc crosslinked ethylene-methacrylic acid copolymers. Properties which distinguish ionomer resins from other polyolefin heat-seal polymers are high clarity, melt strength, solid-state toughness and resistance to oil/fat permeation. Ionomer resins are generally available as either a sodium or a zinc ionomer, and are available in a wide variety of grades. Amine ionomers are also produced. Although all grades of ionomer resins generally exhibit the properties noted above when compared to other heatsealed polymers, sodium ionomers are known for exceptional toughness and resistance to fats and oils, while zinc ionomers exhibit outstanding adhesion to unprimed foil and possess excellent chemical resistance. Sodium ionomers have proved to provide the best clarity, the zinc ionomers proving hazy at times.

Various grades of ionomer resins are available for extrusion coating and film extrusion. It is also known that ionomer resins can be coextruded with other plastic resins and exhibit adhesion to other polyolefins, nylon resins and coextrudable adhesive resins often used as bonding layers in multi-ply coextruded structures. A very wide variety of ionomer resins are manufactured by E.I. DuPont de Nemours and Company under the registered trademark "SURLYN".

Layers of ionomer resins can be formed by casting or extrusion, the latter being preferred. Once formed there are no significant differences between cast and extruded layers. When the ionomer resin layers are sufficiently thick, polycarbonate layers can be eliminated altogether.

Ionomer resins have several advantages over polyurethane. Polyurethane is difficult to manufacture and hard to fabricate. It is frequently not clear enough for use in windshields and the like. By contrast, ionomer resin films can be easily extruded to desired thicknesses, and at about one-half the material cost of polyurethane. Ionomer resins have demonstrated better adhesion characteristics to polycarbonates, as well as better resistance to lower temperatures. In preferred embodiments, the surface to which the ionomer resin is adhered may be primed to get good adhesion, as is the case with polyurethane. Silane coupling agents are suitable primers. With regard to optical properties, ionomer resins demonstrate better clarity than polyurethanes. Moreover, the ionomer resins are more hydrolytically stable to water, acids and bases, are more resistant to degradation from ultraviolet light, and overall, are less likely to weaken with time. This greatly enhances the useful life of laminates made in accord with the present invention.

The Figures illustrate cross-section views through portions of laminated articles made in accordance with this invention, wherein:
Fig. 1 is a glass/ionomer resin laminate;
Fig. 2 is a glass/ionomer resin laminate having a hard coat on the otherwise exposed surface of the ionomer resin layer;
Fig. 3 is a glass/ionomer resin/polycarbonate laminate;
Fig. 4 is a glass/ionomer resin/polycarbonate laminate having a hard coat on the otherwise exposed surface of the polycarbonate layer;
Fig. 5 is a glass/ionomer resin/glass laminate;
Fig. 6 is a glass/ionomer resin/polycarbonate/ionomer resin/glass laminate;
Fig. 7 is a glass/ionomer resin/acrylic plastic laminate;
Fig. 8 is a glass/ionomer resin/metal laminate; and
Fig. 9 is a glass/ionomer resin/glass/ionomer resin/glass/ionomer resin/glass laminate.

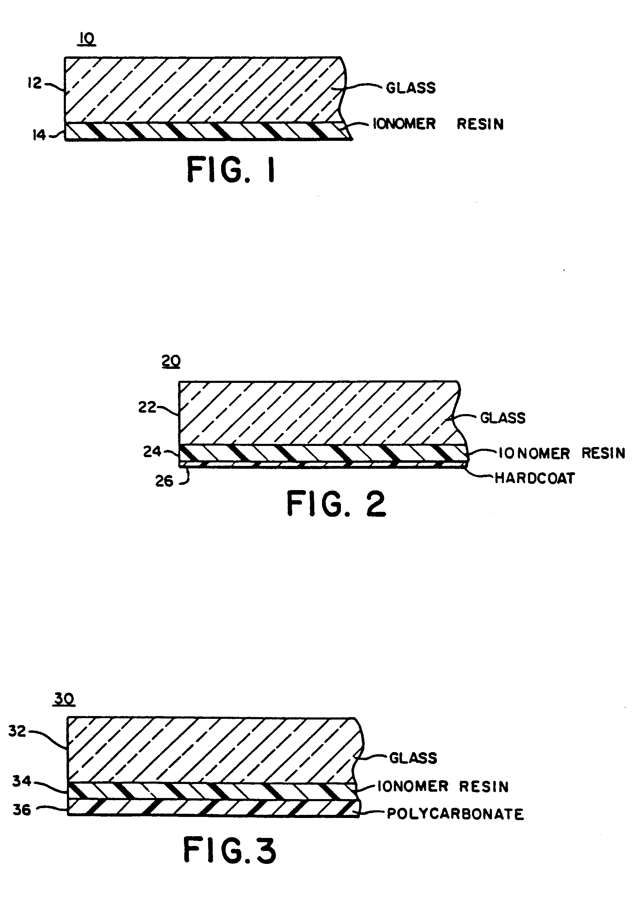

The basic laminated safety glass article according to this invention is shown in Figure 1. The laminate 10 comprises a sheet of glass 12 laminated to an ionomer resin layer 14. The ionomer resin layer 14 is thicker in the basic laminated article than in articles including a layer of polycarbonate or a second layer of glass.

A second embodiment of a laminated safety glass article acording to this invention is shown in Figure 2. The laminate 20 comprises a sheet of glass 22 and an ionomer resin layer 24, similar to the laminate 10 of Figure 1. However, the embodiment of Figure 2 is further provided with a hard coat 26 on the otherwise exposed surface of the ionomer resin film, in order to protect the ionomer resin film from scratching, abrasion and other similar damage. A "hard coat" provides abrasion resistant, optically transparent coatings which serve to protect the surface and render the laminate more resistant to scratching and the like. Useful "hard coat" compositions are described in US-A-4,027,073 and U.S. Patent Application Serial No. 473,790, filed March 10, 1983.

A third embodiment of a laminated safety glass article according to this invention is shown in Figure 3. The laminate 30 comprises a sheet of glass 32 laminated to an ionomer resin film 34, which is in turn laminated to a polycarbonate layer 36. As additional strength is provided by the polycarbonate layer 36, the ionomer resin layer 34 may be thinner than the ionomer resin layer 14 in the embodiment shown in Figure 1.

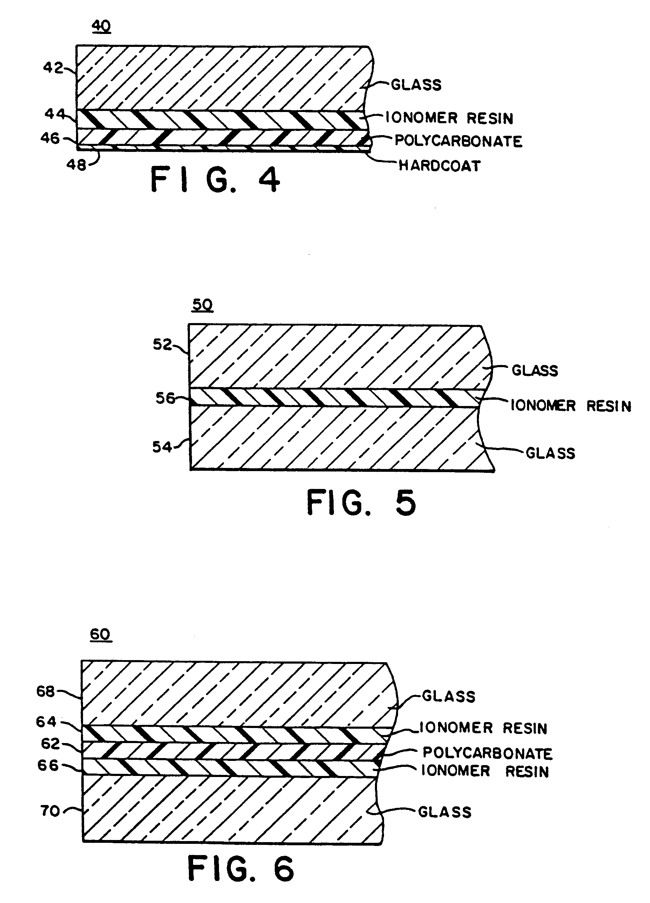

A fourth embodiment of a laminated safety glass article according to this invention is shown in Figure 4. The laminate 40 is similar to that of Figure 3, in comprising a glass sheet 42, an ionomer resin layer 44 and a polycarbonate layer 46. Although polycarbonate is used to provide additional strength to the laminate, polycarbonates are usually too soft, and therefore subject to scratches and abrasion. Acordingly, the laminate 40 is provided with a hard coat layer 48 for protecting the otherwise exposed surface of the polycarbonate layer 46.

A fifth embodiment of a laminated safety glass article according to this invention is shown in Figure 5. The laminate 50 comprises two sheets of glass 52, 54 joined by an ionomer resin layer 56. As no soft surfaces are exposed, no hard coat layer is necessary.

A sixth embodiment of a laminated safety glass article according to this invention is shown in Figure 6. The laminte 60 comprises first a polycarbonate layer 62 sandwiched between two ionomer resin layers 64, 66. The ionomer resin/polycarbonate/ionomer resin laminate is itself sandwiched between two glass sheets 68 and 70. As might be expected, the thicker and more complex laminate 60 shown in Figure 6 is more expensive to produce than the laminates shown in Figures 1 - 5, but it exhibits the greatest strength and resistance to shattering and spalling.

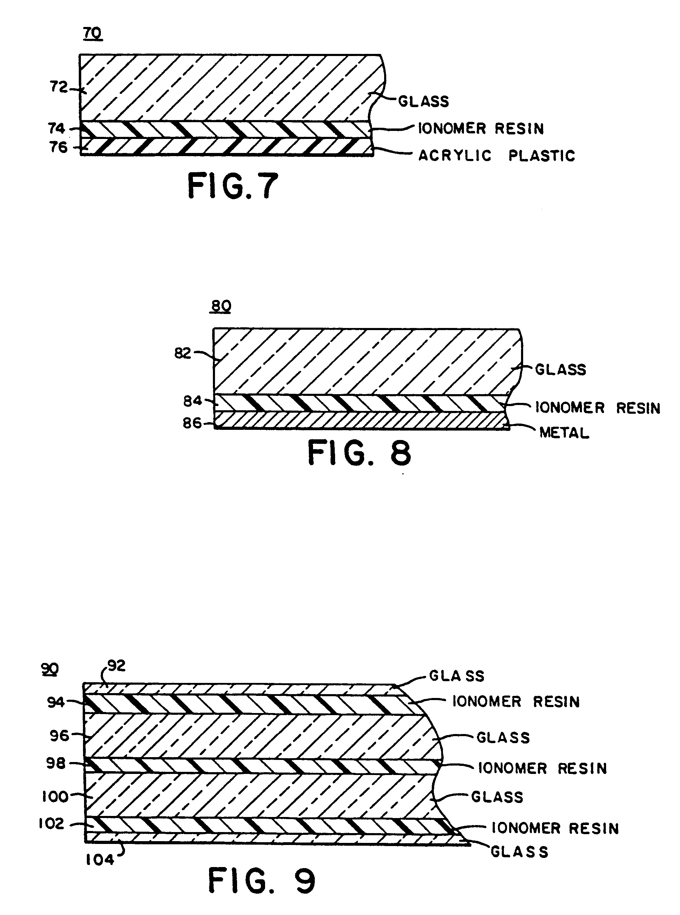

A seventh embodiment of a laminated safety glass article according to this invention is shown in Figure 7. The laminate 70 comprises a sheet of glass 72 and a sheet of acrylic plastic 76 joined by an ionomer resin film layer 74. The acrylic plastic layer 76 may or may not be coated with an appropriate hard coat.

An eighth embodiment of a laminated safety glass article according to this invention is shown in Figure 8. The laminated article 80 comprises a sheet of glass 82 and a sheet of metal 86 joined by an ionomer resin film layer 84. The metal layer 86 may be any metal such as aluminum, silver, iron and copper.

A ninth embodiment of a laminated safety glass article according to this invention is shown in Figure 9. The laminated article 90 comprises sheets of glass 92, 96, 100 and 104 sandwiched by ionomer resin film layers 94, 98 and 102.

A number of transparent laminates were prepared for a first series of tests, using a 2.5 mm thick sheet of float glass, a 3 mm (1/8 inch) sheet of polycarbonate and a 0.7 mm (30 mil) thick layer of an ionomer resin film. The ionomer resin film incorporated in the laminate is formulated by melting the ionomer resin pellets, preferably under an inert atmosphere, such as may be provided by nitrogen, at about 193 ^{o}C (380 ^{o}F), and extruding the molten resin through a die in accordance with procedures well known in the art. Films varying in thickness from 0.025 to 2.5 mm (1 mil to 100 mils) may be used in the laminates of the invention. The ionomer resin film may be rolled and stored, preferably in a bag or other container to protect it from dust, dirt or other contaminates. The ionomer resin pellets may also be melted and poured into a mold to produce cast sheets of ionomer resin for use in preparing the desired laminates.

The sheets and layers were approximately 10 cm by 12.7 cm (4 inches by 5 inches) in size to facilitate handling and processing. In particular, the ionomer resin film was "SURLYN" 1601, manufactured by the Polymer Products Department of the DuPont Company. The melt index of "SURLYN" 1601 is 1.3 dg/min, ASTM D-1238. The ion type is sodium and the density is 0.94 g/cc. A data information sheet on "SURLYN" 1601 ionomer resin (for flexible packaging) is available under the number E-29173 (7/81). SURLYN type 1707 is also a preferred sodium ionomer resin for use in this invention.

For purposes of simplifying the test, the sandwich was constructed with one outer layer of glass, one inner layer of ionomer resin and one outer layer of polycarbonate. A three layer laminate as tested can be fully expected to perform in the same manner as a five layer lamination such as that shown in the drawing with regard to adhesion, if not overall strength. The sandwiched laminates were assembled in a vacuum bag and placed in an autoclave. The samples were heated to a temperature of from about 93 ^{o}C (200 ^{o}F) to about 135 ^{o}C (275 ^{o}F) over a 45 minute period, were held at the elevated temperature for about 15 minutes, and were then cooled to room temperature, approximately 18 ^{o}C - 24 ^{o}C (65 ^{o}F - 70 ^{o}F). After cooling, the laminates were immersed in boiling water in an effort to promote premature and unwanted delamination. Throughout all of the examples herein, the same basic procedure, involving vacuum bag, autoclave, heating up, sustained heating and cooling were followed unless otherwise noted.

The tests were conducted with and without certain primers to promote adhesion between the ionomer resin and the glass and polycarbonate respectively. Primers suitable for glass, and the glass/ionomer resin interface in particular, were found to include silanes, such as those produced under the registered trademarks "Z-6040" and "Z-6020" by Dow Chemical Company. Other primers suitable for the polycarbonate/ionomer resin interface in particular, were found to include organic amines, usually in a diluted solution with an inert solvent (unlikely to attack the polycarbonate, e. g. alkanes and alcohols), such as aliphatic or polyethylene amines or ethanolamines, and specifically diethylenetriamine. Other specific primers include diisocyanates (toluene diisocyanate) and polyacrylic acid (produced under the registered trademarks "ACRYLOID" and "ACRYSOL" by the Rohm and Haas Company).

### EXAMPLE 1

A laminate of glass and ionomer, the glass surface to be laminated to the ionomer resin having been primed with Dow Z-6020 was formed following the procedure set forth above. The laminate did not undergo delamination in boiling water.

### EXAMPLE 2

A 30 cm by 30 cm laminate comprising a 3 mm thick clear polycarbonate sheet sandwiched between two 0.7 mm thick ionomer resin films made from SURLYN 1601 which in turn are sandwiched between 2.5 mm thick sheets of chemically strengthened glass was prepared following the procedure set forth above. The glass and polycarbonate components were throughly cleaned and treated with a silane primer to enhance adhesion. The components were dried, and free of residual solvents and moisture prior to forming the sandwich. The sandwiched laminate was bagged and autoclaved at a temperature of 96 ^{o}C to 124 ^{o}C (205 ^{o} to 255 ^{o}F) under 10 atmospheres of pressure for a period of about 90 minutes. The laminate was cooled quickly to room temperature. The laminate was used as a target and a 45 calibre bullet from a handgun was fired at the laminate three times. No delamination occurred although the glass shattered. The ionomer resin film remained laminated to the polycarbonate and glass surfaces.

### EXAMPLE 3

Laminates 75 mm square were prepared following the procedure and using like components specified in Example 2 were prepared. The resultant laminates were placed in boiling water. The laminates did not lose integrity after two hours in boiling water. Small bubbles did develop about the perimeter the laminates; however, visibility was only marginally impaired around the perimeter.

On the basis of the foregoing examples, ionomer resin films may be substituted for polyurethane and polyvinyl butyral in laminated safety glass, at a substantial savings in cost. The best primer for the polycarbonate/ionomer resin interface is Dow Z-6020. Other primers could prove satisfactory.

### EXAMPLE 4

A 30 cm by 30 cm laminate comprising an 0.25 mm thick ionomer resinfilm sandwiched between 1 mm thick chemically strengthened glass and a 1 mm thick aluminized steel sheet following the procedure set forth in Example 2. The laminate was cycled between -29 to 71 ^{o}C (-20 to 160 ^{o}F), 10 times and did not undergo delamination.

### EXAMPLE 5

A 30 cm by 30 cm laminate comprising a 3 mm thick clean acrylic sheet sandwiched between two 1.4 mm thick ionomer resin films made from SURLYN 1707 which in turn are sandwiched between 3 mm thick sheets of chemically strengthened glass was prepared following the procedure of Example 2. A long 22 caliber rifle bullet was fired at the resulting laminate from a distance of 10.7 m (35 feet), and no penetration resulted.

### EXAMPLE 6

A 30 cm by 30 cm laminate comprising chemically strengthened glass and ionomer resin film made from SURLYN 1707 sandwiched in the order shown in Figure 9 was prepared following the procedure of Example 2. The lamina was laid up in the following order, starting with the target side: a 2.5 mm thick lamina of chemically strengthened glass, a 5 mm thick lamina of ionomer resin film, or 12 mm thick lamina of chemically strengthened glass, a 5 mm thick lamina of ionomer resin film and a 1 mm thick lamina of chemically strengthened glass. All surfaces were cleaned and treated with a silane primer to enhance adhesion. In this instance. the laminate was autoclaved under vacuum at a temperature between 96 ^{o}C and 140 ^{o}C (205 ^{o}F and 285 ^{o}F) at 10 atmosphere pressure for a 2.5 hours. After cooling quickly, the resulting laminate was clear and used as a target with the mass of glass facing in the direction of fire. A .357 magnum handgun using 158 grain metal painted ammunition of Remington was fired at the laminate. No penetration occurred after three shots were fired in a triangular pattern. The 1 mm thick glass sheet did splinter but remained laminated.

This example was repeated substituting 6 mm thick cast sheets of ionomer resin for the 5 mm thick ionomer resin lamina and in place of the 1 mm thick glass spall sheet. The resultant laminate was not penetrated when fired on as above, and only a slight bulge appeared on the spall sheet.

It is to be understood that the foregoing examples are given for the purpose of illustration and that any other suitable glass, ionomer resin, reinforcing plastic or the like could be used provided that the teachings of this disclosure are followed.

The basic building block of this invention, namely a laminate comprising a sheet of glass laminated to an ionomer resin film, may be used in multiples to achieve nearly any desired strength. This is illustrated in Figure 9, wherein lamina of varying thickness of glass are sandwiched with lamina of varying thickness of ionomer resin film. By varying the number and the thickness of the lamina of glass and ionomer resin film, always, however, laminating in the alternative order shown in the Figure, it is possible to produce laminates having resistance to exceptionally large force. The principles of this invention may also be applied to curved laminated articles, such as wind-shields and face masks. The laminates shown in Figures 1 - 9 are flat merely for purposes of facilitating illustration. Where transparency is not critical, the bonding techniques taught herein may be used for laminating metal as well as glass such as illustrated in Figure 8.

## Claims

1. A transparent laminated safety glass comprising: a first lamina consisting of an ionomer resin film (14, 24, 34, 44, 56, 65, 66, 74, 84, 94, 98, 102) in the form of a metal crosslinked ethylene-methacrylic acid polymer and one sheet (12, 22, 32, 42, 52, 68, 72, 82, 96) of primed or umprimed glass laminated to said ionomer resin film (14, 24, 34, 44, 56, 65, 66, 74, 84, 94, 98, 102), characterized in that the ionomer resin film (14, 24, 34, 44, 56, 65, 66, 74, 84, 94, 98, 102) further contains organic diamines or triamines in an amount of about 0.5 to about 7 %, by weight, based on the weight of the resin.

2. The transparent laminated safety glass of claim 1, characterized in that the metal is sodium and/or zinc.

3. The transparent laminated safety glass of claim 1, characterized in that the sodium and zinc ionomer resins are combined in the ratio of 95:5 to 5:95.

4. The transparent laminated safety glass of claim 1, 2 or 3, characterized in that the ionomer resin film (14, 24, 34, 44, 56, 65, 66, 74, 84, 94, 98, 102) is water insoluble.

5. The transparent laminated safety glass of claim 1, 2, 3 or 4, characterized in that the first lamina (film 14, 24, 34, 44, 56, 65, 66, 74, 84, 94, 98, 102) has a thickness of 0.7 to 5 mm.

6. The transparent laminated safety glass of one of the claims 1 to 5, characterized by a sheet (36, 46, 62) of polycarbonate laminated to said ionomer resin film (34, 44, 64, 66) on the surface thereof opposite said sheet (32, 42, 68, 70) of glass, whereby said ionomer resin film (34, 44, 64, 66) is sandwiched between said sheet (32, 42, 68, 70) of glass and said sheet (36, 46, 62) of polycarbonate.

7. The transparent laminated safety glass of one of the claims 1 to 6, characterized by a second sheet (54, 92, 100, 104) of glass laminated to said ionomer resin film (56, 94, 98, 102) said ionomer resin film (56, 94, 98, 102) being sandwiched between said two sheets of glass.

8. The transparent laminated safety glass of one of the claims 1 to 7, characterized in that all surfaces laminated to said ionomer resin films (14, 24, 34, 44, 56, 65, 66, 74, 84, 94, 98, 102) are first primed to promote adhesion.

9. The transparent laminated safety glass of one of the claims 1 to 8, characterized in that the surfaces are primed with a silane coupling agent.

10. The transparent laminated safety glass of one of the claims 1 to 9, characterized in that the organic diamines are aliphatic diamines, and that the organic triamines are aliphatic triamines or diethylenetriamine

## Patentansprüche

1. Ein transparentes, laminiertes Sicherheitsglas mit einer ersten Schicht bestehend aus einem ionomeren Harzfilm (14, 24, 34, 44, 56, 65, 66, 74, 84, 94, 98, 102) in Form eines metall-vernetzten Ethylen-Methacryl-Säurepolymeren und ein Blatt (12, 22, 32, 42, 52, 68, 72, 82, 96) eines grundierten oder eines nicht grundierten Glases, das auf den ionomeren Harzfilm (14, 34, 34, 44, 56, 65, 66, 74, 84, 94, 98, 102) laminiert ist, dadurch gekennzeichnet, daß der ionomere Harzfilm (14, 34, 34, 44, 56, 65, 66, 74, 84, 94, 98, 102) weiterhin organische Diamine oder Triamine in einer Menge von etwa 0,5 bis ungefähr 7 Gewichtsprozenten, basierend auf dem Gewicht des Harzes, enthält.

2. Das transparente Sicherheitsglas nach Anspruch 1, dadurch gekennzeichnet, daß das Metall Natrium und/oder Zink ist.

3. Das transparente Sicherheitsglas nach Anspruch 1, dadurch gekennzeichnet, daß die Natrium- und Zink-Ionomer-Harze in einem Verhältnis von 95 zu 5 bis 5 zu 95 kombiniert sind.

4. Das transparente Sicherheitsglas nach Anspruch 1, 2 oder 3, dadurch gekennzeichnet, daß der ionomere Harzfilm (14, 24, 34, 44, 56, 65, 66, 74, 84, 94, 98, 102) wasserunlöslich ist.

5. Das transparente Sicherheitsglas nach Anspruch 1, 2, 3 oder 4, dadurch gekennzeichnet, daß die erste Schicht (Film 14, 24, 34, 44, 56, 65, 66, 74, 84, 94, 98, 102) eine Dicke von 0,7 bis 5 mm hat.

6. Das transparente Sicherheitsglas nach einem der Ansprüche 1 bis 5, gekennzeichnet durch eine Schicht (36, 46, 62) Polycarbonat, die durch Laminieren mit dem ionomeren Harzfilm (34, 44, 64, 66) auf ihrer dem genannten Blatt aus Glas (32, 42, 68, 70) gegenüberliegenden Oberfläche verbunden ist, wobei der genannte ionomere Harzfilm (34, 44, 64, 66) zwischen das genannte Blatt aus Glas (32, 42, 68, 70) und die genannte Schicht (36, 46, 62) aus Polycarbonat geschichtet ist.

7. Das transparente laminierte Sicherheitsglas nach einem der Ansprüche 1 bis 6, gekennzeichnet durch ein zweites Blatt aus Glas (54, 92, 100, 104), das durch Luminieren mit dem ionomeren Harzfilm (56, 94, 98, 102) verbunden ist, wobei der ionomere Harzfilm (56, 94, 98, 102) eine Lage zwischen den beiden Blättern aus Glas bildet.

8. Das transparente laminierte Sicherheitsglas nach einem der Ansprüche 1 bis 7, dadurch gekennzeichnet, daß alle Oberflächen, die durch Laminieren mit dem genannten ionomeren Harzfilm (14, 24, 34, 44, 56, 65, 66, 74, 84, 94, 98, 102) verbunden sind, zuvor einen Voranstrich erhalten haben, um die Adhäsion zu verbessern.

9. Das transparente laminierte Sicherheitsglas nach einem der Ansprüche 1 bis 8, dadurch gekennzeichnet, daß die Oberflächen mit einem Silan-Kopplungsmedium vorangestrichen sind.

10. Das transparente laminierte Sicherheitsglas nach einem der Ansprüche 1 bis 9, dadurch gekennzeichnet, daß die organischen Diamine aliphatische Diamine sind und daß die organischen Triamine aliphatische Triamine oder Diethylentriamin sind.

## Revendications

1. Transparent verre laminé de securité comprenant : une première couche qui consiste d'un film ionomerique de résine (14, 24, 34, 44, 56, 65, 66, 74, 84, 94, 98, 102) en forme d'un éthylène-méthacrylate-polymère métal-réticulé et une lame (12, 22, 32, 42, 52, 68, 72, 82, 96) d'un verre imprimé ou non imprimé, qui est laminé sur le film ionomerique de résine (14, 24, 34, 44, 56, 65, 66, 74, 84, 94, 98, 102), characterisé en ce que le film ionomerique de résine (14, 24, 34, 44, 56, 65, 66, 74, 84, 94, 98, 102) contient en plus des diamines ou des triamines organiques dans une quantité d'environ 0,5 à peu près de 7 pourcentage en pois basé sur le pois de la résine.

2. Le transparent verre laminé de securité selon la revendication 1, characterisé en ce que le métal est sodium et/ou zinc.

3. Le transparent verre laminé de securité selon la revendication 1, characterisé en ce que le sodium et le zinc résines ionomeriques sont combinés en proportions de 95:5 à 5:95.

4. Le transparent verre laminé de securité selon la revendication 1, 2 ou 3, characterisé en ce que le film (14, 24, 34, 44, 56, 65, 66, 74, 84, 94, 98, 102) est insoluble dans l'eau.

5. Le transparent verre laminé de securité selon la rendication 1, 2, 3 ou 4, characterisé en ce que la premiére couche (film 14, 24, 34, 44, 56, 65, 66, 74, 84, 94, 98, 102) a une épassieur de 0,7 à 5 mm.

6. Le transparent verre laminé de securité selon les revendications 1, 2, 3, 4 ou 5, characterisé par une couche (36, 46, 62) de polycarbonate qui est laminée sur ledit film ionomerique de résine (34, 44, 64, 66) sur la surface de ce dernier qui est opposée de ladite lame (32, 42, 68, 70) de verre, ladite film (14, 24, 34, 44, 56, 65, 66, 74, 84, 94, 98, 102) etant stratifiée entre ladite lame (32, 42, 68, 70) et ladite couche (36, 46, 62) de polycarbonate.

7. Le transparent verre laminé de securité selon la revendication 1, 2, 3, 4, 5 ou 6, characterisé par une deuxième lame (54, 92, 100, 104) de verre laminé sur ladite film ionomerique (56, 94, 98, 102), ladite film ionomerique (56, 94, 98, 102) entant stratifié entre le deux lames de verre.

8. Le transparent verre laminé de securité selon la revendication 1, 2, 3, 4, 5, 6 ou 7, characterisé en ce que toutes les surfaces laminées sur lesdites films ionomeriques (14, 24, 34, 44, 56, 65, 66, 74, 84, 94, 98, 102) de résine sont préalablement imprimés pour améliorer l'adhésion.

9. Le transparent verre laminé de securité selon la revendication 1, 2, 3, 4, 5, 6, 7 ou 8, characterisé en que les surfaces sont imprimées avec de moyen de couplage en silane.

10. Le transparent verre laminé de securité selon la revendication 1, 2, 3, 4, 5, 6, 7, 8 ou 9, characterisé en que les diamines organiques sont des diamines aliphatiques et les triamines organiques sont des triamines aliphatiques ou diethylenetriamine.
